(19) Europäisches Patentamt
European Patent Office
Office européen des brevets

(11) EP 4 549 118 A1

(12) EUROPEAN PATENT APPLICATION
published in accordance with Art. 153(4) EPC

(43) Date of publication:
07.05.2025 Bulletin 2025/19

(51) International Patent Classification (IPC):
B29B 17/00 (2006.01)    B32B 27/00 (2006.01)

(21) Application number: 23810270.1

(22) Date of filing: 23.06.2023

(52) Cooperative Patent Classification (CPC):
B29B 17/00; B32B 27/00; B32B 27/32; C08J 11/16;
Y02W 30/62

(86) International application number:
PCT/JP2023/023287

(87) International publication number:
WO 2024/004847 (04.01.2024 Gazette 2024/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 01.07.2022 JP 2022106918

(71) Applicant: artience Co., Ltd.
Tokyo 104-8377 (JP)

(72) Inventors:
• YAMAGAMI, Tomoe
1048378 Tokyo (JP)
• SHIKIJI, Wataru
1048378 Tokyo (JP)

(74) Representative: Becker, Eberhard
Becker Kurig & Partner
Patentanwälte mbB
Bavariastraße 7
80336 München (DE)

(54) **METHOD FOR SEPARATING AND RECOVERING LAMINATE**

(57) In the present disclosure, a method for separating and recovering a laminate is provided, the method including a step of immersing a laminate including at least a plastic base material layer and a printing layer in a detachment liquid to detach the printing layer so that a volume-based median diameter (D50) of a printing layer component detached from the plastic base material layer becomes 1 μm or more and recovering a plastic base material, in which the printing layer is 0.01 mass% or more of a total mass of the detachment liquid.

**Description**

[Technical Field]

The present invention pertains to a method for separating and recovering a laminate including at least a plastic base material layer and a printing layer.

[Background Art]

In recent years, packages, plastic bottles and other plastic products for which a plastic film is used as a raw material have been discarded and dumped into the ocean as garbage and have become an environmental issue. These plastic products are decomposed in sea water, turn into submicron-sized debris (microplastics) and float in sea water. There is a concern that the microplastics may be ingested into marine life such as fishes and thereby concentrated in biological bodies and may also affect the health of seabirds or human beings that ingest the marine life as food.

Examples of the plastic products include food-packaging packages and the like having a multilayer configuration for which a plastic film is used, and, in such food-packaging packages, a variety of plastic base materials such as a polyester base material, a nylon base material (NY), a polypropylene base material (PP) and a polyethylene base material (PE) are used as film base materials. Printing is performed on these film base materials with printing ink, and the film base materials are pasted to other film base materials or thermally-melted resin base materials with an adhesive or the like, then, cut and thermally fused to become packages. However, such food-packaging packages having a multilayer configuration contain a plurality of dissimilar materials that is not compatible with each other in a mixture form and thus have a problem in that material recycling is not possible as they are.

Regarding the material recycling of such packaging materials having a multilayer configuration, for example, Patent Literature 1 and 2 disclose techniques for detaching a printing layer from a laminate having a surface-printing configuration or a multilayer configuration by treating the laminate including a detachment layer containing a polyurethane resin having a predetermined acid value with an alkali aqueous solution.

In addition, Patent Literature 3 describes a technique for detaching a printing layer from a polyester base material by immersing a laminate having the polyester base material and the printing layer in a sodium hydroxide aqueous solution and stirring the laminate under certain conditions.

[Citation List]

[Patent Literature]

[Patent Literature 1]
Japanese Patent Laid-Open No. 2020-090627
[Patent Literature 2]
Japanese Patent Laid-Open No. 2021-098294
[Patent Literature 3]
Japanese Translation of PCT International Application Publication No. 2022-510105

[Summary of Invention]

[Technical Problem]

However, in detachment steps described in Patent Literature 1 to 3, when the amount of the laminate to be treated with the alkali aqueous solution is increased to improve the treatment efficiency, the detachability deteriorates. In addition, the amount of the printing layer component in the treatment liquid also increases, which makes it likely for the detached printing layer to adhere to the base material again. Furthermore, an increase in the stirring rate for improvement in the detachability creates a problem in that the detached printing layer is finely dispersed and more likely to re-adhere to the plastic base material. Here, "re-adhesion" refers to a phenomenon in which a detachment layer such as a printing layer or adhesive layer detached from a base material is finely dispersed due to stirring and adheres to the base material again and becomes a cause of the coloration of a base material to be recovered or deterioration of the properties of a recycled material. That is, a molding material that is obtained by recycling a base material to which a printing layer has re-adhered as described above causes deterioration of the appearance due to coloration or deterioration of the physical properties.

Therefore, an objective of the present invention is to provide a method for separating and recovering a laminate suitable for plastic recycling in which, even under a condition where the amount of a printing layer during a detachment treatment is large, the detachability of the printing layer or an adhesive layer is excellent and, furthermore, re-adhesion of a detached printing layer component is suppressed. Furthermore, another objective is to provide a method for producing a high-quality molding material that is obtained by heat-molding a recovered plastic base material.

[Solution to Problem]

That is, the present invention pertains to a method for separating and recovering a laminate, the method including a step of immersing a laminate including at least a plastic base material layer and a printing layer in a detachment liquid and stirring or shaking the laminate, detaching the printing layer so that a volume-based median diameter (D50) of a printing layer component detached from the plastic base material layer becomes 1 µm or more and recovering a plastic base material, in which a content rate of the printing layer is 0.01 mass% or more of a total mass of the detachment liquid.

In addition, the present invention pertains to the method for separating and recovering a laminate, in which a span value A represented by the following calculation equation of the detached printing layer component is 10 or less.

$$A = (D90 - D10)/D50$$

D10: A cumulative 10% diameter of a volume-based particle size distribution that is obtained by laser diffraction-type particle size distribution measurement of the detached printing layer component
D90: A cumulative 90% diameter of the volume-based particle size distribution that is obtained by the laser diffraction-type particle size distribution measurement of the detached printing layer component

In addition, the present invention pertains to the method for separating and recovering a laminate, in which the plastic base material layer is a polyolefin base material.
In addition, the present invention pertains to the method for separating and recovering a laminate, in which the detachment liquid contains water and a surfactant, and a content rate of the surfactant is 0.001 mass% or more of a total mass of the detachment liquid.
In addition, the present invention pertains to the method for separating and recovering a laminate, in which the printing layer contains a colorant, a binder resin and a dispersant, and a content rate of the dispersant is 0.01 mass% or more of a total mass of the colorant.
In addition, the present invention pertains to the method for separating and recovering a laminate, in which the dispersant contains a pigment derivative and/or a resin-type dispersant.
In addition, the present invention pertains to the method for separating and recovering a laminate, in which the dispersant contains a pigment derivative, and a content rate of the pigment derivative is 0.01 to 10 mass% of the total mass of the colorant.
In addition, the present invention pertains to the method for separating and recovering a laminate, in which a content rate of the laminate is 1.5 mass% or more of the total mass of the detachment liquid.
In addition, the present invention pertains to the method for separating and recovering a laminate, in which the detachment liquid contains a basic aqueous solution, and the method further includes a step of detaching the printing layer in the basic aqueous solution and recovering the plastic base material.
In addition, the present invention pertains to a method for producing a molding material, in which a plastic base material recovered by the method for separating and recovering a laminate is melt-kneaded.
In addition, the present invention pertains to a method for producing a molded body, in which a molding material that is obtained by the production method is heat-molded.

[Advantageous Effects of Invention]

The present invention makes it possible to provide a method for separating and recovering a laminate suitable for plastic recycling in which, even under a condition where the amount of a printing layer during a detachment treatment is large, the detachability of the printing layer or an adhesive layer is excellent and, furthermore, re-adhesion of a detached printing layer component is suppressed. Furthermore, the present invention makes it possible to provide a method for producing a high-quality molding material that is obtained by heat-molding a recovered plastic base material.

[Description of Embodiments]

Hereinafter, an embodiment of the present invention will be described in detail, but the description of the embodiment or requirements to be described below is simply examples of the embodiment of the present invention, and the present invention is not limited to the contents thereof within the scope of the gist of the present invention.

A method for separating and recovering a laminate of the present invention includes a step of immersing a laminate including at least a plastic base material layer and a printing layer in a detachment liquid to detach the printing layer so that the volume-based median diameter (D50) of a printing layer component detached from the plastic base material layer becomes 1 μm or more and recovering a plastic base material, and the printing layer is 0.01 mass% or more of the total mass of the detachment liquid.

In the separation and recovery of a laminate, when the amount of the laminate is increased relative to the detachment liquid to improve the treatment efficiency, the amount of the printing layer also becomes large relative to the detachment liquid, and thus the detachability deteriorates, and, furthermore, the detached printing layer component is likely to re-adhere to the detached base material. Furthermore, under a stirring condition, the collision frequency of the laminate increases, and thus there is a tendency that the detached printing layer component becomes small.

The inventors found that, under a condition where the amount of the printing layer is large relative to the detachment liquid, when the printing layer is detached so that the median diameter (D50) of the detached printing layer component becomes 1 μm or more, it is possible to effectively suppress re-adhesion while maintaining the excellent detachability of the printing layer. This is considered to be because the mobility of the detached printing layer component in the detachment liquid or the polarity of the surface is appropriately controlled.

Examples of means for detaching the printing layer so that the median diameter of the detached printing layer component becomes 1 μm or more include selecting a condition for a detachment test such as the stirring rate, incorporating a surfactant into the detachment liquid and incorporating a dispersant into the printing layer, but the means is not limited thereto, and each means is preferably combined as appropriate. The details of each means will be described below.

<Separation and recovery method>

The method for separating and recovering a laminate of the present invention includes a step of immersing a laminate including at least a plastic base material layer and a printing layer in a detachment liquid to detach the printing layer so that the volume-based median diameter (D50) of a printing layer component detached from the plastic base material layer becomes 1 μm or more and recovering the plastic base material.

In the present invention, "detachment" refers to the fact that a detachment layer dissolves or swells and peels off due to a detachment liquid, whereby a base material is detached from a laminate and includes both forms of (1) a case where the detachment layer dissolves and the base material detaches and (2) a case where the detachment layer peels off by neutralization, swelling or the like rather than dissolves and the base material detaches.

The present invention is intended to obtain the detached plastic base material as a recycled base material/recycled base material, and thus an aspect in which the detachment layer or the like has been removed from the plastic base material as much as possible is preferable. Specifically, it is preferable that, out of 100 mass% of the detachment layer, at least 50 mass or more is detached in terms of the area or in the film thickness direction. An aspect in which more preferably 60 mass% or more, still more preferably 80 mass% or more and particularly preferably 90 mass% or more is detached is preferable.

<Particle size distribution of detached printing layer component>

In the present invention, the volume-based median diameter (D50) and span value A of the printing layer component detached from the plastic base material layer are measured with a laser diffraction-type particle size distribution analyzer. The span value A is represented by the following equation.

$$A = (D90 - D10)/D50$$

D10: A cumulative 10% diameter of a volume-based particle size distribution that is obtained by laser diffraction-type particle size distribution measurement of the detached printing layer component
D90: A cumulative 90% diameter of the volume-based particle size distribution that is obtained by the laser diffraction-type particle size distribution measurement of the detached printing layer component

In the present invention, it is important that the median diameter of the detached printing layer component is 1 μm or more. When the median diameter of the detached printing layer component is 1 μm or more, it is possible to suppress the printing layer component detached as described above re-adhering to the base material and to obtain a high-performance recycled material. The median diameter of the detached printing layer component is preferably 5 μm or more, more

preferably 10 μm or more, still more preferably 15 μm or more and particularly preferably 20 μm or more. In addition, the median diameter of the detached printing layer component is preferably 1000 μm or less and more preferably 800 μm or less. When the median diameter is 1000 μm or less, separation of the base material and the printing layer component after detachment becomes easy, which is preferable.

The span value A represents the particle size distribution width of the detached printing layer component, and, as the numerical value becomes larger, there is a tendency that a fine printing layer component that has a wider particle size distribution width and is more likely to re-adhere to the base material is contained. The span value A is preferably 10 or less, more preferably 8 or less and still more preferably 5 or less. When the span value is 10 or less, re-adhesion of the detached printing layer can be suppressed, which is preferable.

<Detachment liquid>

The detachment liquid needs to be a liquid that swells or dissolves the detachment layer and can be selected as appropriate in consideration of the detachment easiness of the detachment layer to be described below. Examples of such a detachment liquid include water, basic aqueous solutions and acidic aqueous solutions. These detachment liquids may be heated.

The detachment liquid is more preferably a basic aqueous solution containing a basic compound from the viewpoint of detaching urethane-based adhesive layers that are normally used in packaging materials.

[Surfactant]

The detachment liquid preferably contains water and a surfactant. The surfactant mainly plays a role of improving the detachability of the detachment layer. This is considered to be because the action of the surfactant makes it easy for the detachment liquid to infiltrate into the detachment layer, such as a primer layer, the printing layer and an adhesive layer, and accelerates the detachability. In addition, it is easy to control the median diameter of the detached printing layer component in the detachment liquid to be 1 μm or more. In addition, when the amount of the laminate is increased relative to the detachment liquid in the separation and recovery, there is a tendency that the laminate and the separated base material curl in a state of involving detached ink pieces, and it is difficult to cleanly remove the ink pieces or the like involved in the curls even by immersing the laminate in the detachment liquid. However, when the detachment liquid contains a surfactant, the surfactant is adsorbed to the surfaces of the laminate and the separated base material, and curling is suppressed. As a result, the detachability improves, and re-adhesion can be suppressed. Furthermore, in a case where the detachment liquid contains a surfactant, it is possible to detach the printing layer in contact with the plastic base material even without the detachment layer.

An HLB value is an index value relating to the affinity of a surfactant to water and oil and an equally divided value with an assumption that the HLB value of a substance having no hydrophilic groups is zero and the HLB value of a substance only having a hydrophilic group is 20. The concept of HLB was proposed by William Griffin of the Atlas Powder Company on 1949, and several methods for determining HLB values by calculation have been proposed, but the HLB value in the present invention can be obtained from the following equation by the Griffin method.

$$HLB = 20 \times [(\text{molecular weight of hydrophilie group contained in surfactant})/(\text{molecular weight of surfactant})] \qquad \text{(Equation)}$$

Examples of the hydrophilic group that is contained in the surfactant include a hydroxyl group and an ethyleneoxy group.

The HLB value of the surfactant in the present invention is preferably 7 or higher. When HLB is 7 or higher, excellent deinkability and re-adhesiveness are exhibited. The HLB value of the surfactant is preferably 8 or higher and more preferably 10 or higher. In addition, the HLB value of the surfactant is preferably 20 or lower, more preferably 19 or lower and still more preferably 17 or lower. When the HLB value is 20 or lower, anti-foaming properties are excellent, which is preferable.

Examples of the kind of the surfactant include nonionic surfactants, anionic surfactants, cationic surfactants and amphoteric surfactants, and a preferable kind and amount of the surfactant blended can be selected and used as appropriate depending on characteristics in demand. From the viewpoint of the detachability and the anti-foaming properties, at least one selected from the group consisting of anionic surfactants and nonionic surfactants is preferable.

In addition, the surfactant is a structure to which an alkylene oxide (hereinafter, also referred to as AO) has been added and thereby makes the deinkability or the re-adhesiveness favorable, which is preferable.

(Nonionic surfactant)

The nonionic surfactant is not particularly limited, but is preferably an alkylene oxide adduct to which an alkylene oxide has been added. A compound obtained by adding an alkylene oxide to an alcohol having active hydrogen, a compound obtained by adding an alkylene oxide to an amine or a compound obtained by adding an alkylene oxide to a fatty acid is more preferable. The addition may be any of random addition or block addition. In addition, the number of carbon atoms in the alkylene oxide is preferably two to four.

The nonionic surfactant is more preferably an alcoholic nonionic surfactant obtained by adding an alkylene oxide having 2 to 4 carbon atoms to an alcohol.

[Alcoholic nonionic surfactant]

Examples of the alcoholic nonionic surfactant include alkylene oxide adducts of a primary or secondary alcohol having a total of 8 to 24 carbon atoms or alkylene oxide adducts of an alkylphenol having a total of 8 to 12 carbon atoms. The alkylene oxide adducts of a primary or secondary alcohol having a total of 8 to 24 carbon atoms may or may not be substituted.

Examples of the alkylene oxide adducts of a primary or secondary alcohol having a total of 8 to 24 carbon atoms include lauryl alcohol, stearyl alcohol, oleyl alcohol, dodecyl alcohol, arachidyl alcohol, behenyl alcohol, lignoceryl alcohol, myristyl alcohol and the like.

In addition, examples of the alkylene oxide that is added to alcohols include ethylene oxide, propylene oxide and butylene oxide, and an alcoholic nonionic surfactant essentially containing ethylene oxide is preferable. The mole number of the alkylene oxide added is preferably 1 to 100 moles and more preferably 2 to 50 moles with respect to 1 mole of the alcohol or alkylphenol. When the mole number is within the above-described range, particularly, the detachment is excellent, which is preferable.

[Fatty acid-based nonionic surfactant]

The fatty acid-based nonionic surfactant is not particularly limited in terms of the structure, and examples thereof include alkylene oxide adducts of a higher fatty acid having a total of 10 to 24 carbon atoms, fats and oils composed of an ester of the saturated or unsaturated higher fatty acid having a total of 10 to 24 carbon atoms and glycerin and, furthermore, alkylene oxide adducts of a mixture of the fat and oil and a 2 to 10 polyvalent alcohol. The higher fatty acid having a total of 10 to 24 carbon atoms may or may not be saturated.

Examples of the higher fatty acid having a total of 10 to 24 carbon atoms include saturated higher fatty acids such as lauric acid, myristic acid, palmitic acid, stearic acid, arachic acid and behenic acid; and unsaturated higher fatty acids such as palmitoleic acid, oleic acid, elaidic acid, linoleic acid, linolenic acid, erucic acid and ricinoleic acid. Examples of the polyvalent (di- to decavalent) alcohol include ethylene glycol, propylene glycol, glycerin, polyglycerin, sorbitol, sorbitan, sucrose and the like. The kind and mole number of the alkylene oxide added are the same as those described in the [Alcoholic nonionic surfactant] section.

[Amine-based nonionic surfactant]

Examples of an amine-based nonionic surfactant include AO adducts of a saturated or unsaturated primary or secondary amine having a total of 8 to 36 carbon atoms. Examples of the amine include 2-ethylhexylamine, di 2-ethylhexylamine, laurylamine, dilaurylamine, tetradecylamine, ditetradecylamine, hexadecylamine, dihexadecylamine, stearylamine, distearylamine, oleylamine, dioleylamine and the like. In addition, the kind and mole number of AO added are the same as what has been described above.

(Anionic surfactant)

The anionic surfactant is preferably a non-soap type, and examples thereof include sulfonic acid-based anionic surfactants, sulfate-based anionic surfactants, carboxylic acid-based anionic surfactants and phosphate-based anionic surfactants.

[Sulfonic acid-based anionic surfactant]

Examples of the sulfonic acid-based anionic surfactant include alkylene oxide adducts of alkylsulfonic acid, alkylbenzenesulfonic acid, alkylnaphthalenesulfonic acid, alkyldiphenyl ether disulfonic acid, alkyl methyl taurine, sulfosuccinic acid diester or sulfonic acid and salts thereof. As specific examples, it is possible to use hexanesulfonic acid, octanesulfonic acid, decanesulfonic acid, dodecanesulfonic acid, toluenesulfonic acid, cumenesulfonic acid, octylbenzenesulfonic acid, dodecylbenzenesulfonic acid, dinitrobenzenesulfonic acid, lauryl dodecyl phenyl ether disulfonic acid and the like.

[Sulfate-based anionic surfactant]

Examples of the sulfate-based anionic surfactant include sulfate (alkyl ether sulfate), alkylene oxide adducts of sulfate and salts thereof. As specific examples, it is possible to use lauryl sulfate, myristyl sulfate, polyoxyethylene laurylether sulfate and the like.

[Carboxylic acid-based anionic surfactant]

Examples of the carboxylic acid-based anionic surfactant include alkylene oxide adducts of alkyl carboxylic acid, alkylbenzene carboxylic acid or carboxylic acid and salts thereof. As specific examples, it is possible to use lauric acid, myristic acid, palmitic acid, stearic acid, polyoxyethylene lauryl ether acetic acid, polyoxyethylene tridecyl ether acetic acid and the like.

[Phosphate-based anionic surfactant]

Examples of the phosphate-based anionic surfactant include phosphate (alkyl ether phosphate), alkylene oxide adducts of phosphate ester and salts thereof. As specific examples, it is possible to use octyl phosphate, lauryl phosphate, tridecyl phosphate, myristyl phosphate, cetyl phosphate, stearyl phosphate, polyoxyethylene octyl ether phosphate, polyoxyethylene lauryl ether phosphate and the like.

The anionic surfactant preferably has an alkyl group having 2 to 24 carbon atoms or an alkenyl group having 2 to 24 carbon atoms and more preferably has an alkyl group having 8 to 18 carbon atoms. The alkyl group or the alkenyl group may be linear or may be branched.

In addition, in a case where the anionic surfactant is an alkylene oxide adduct, examples of the alkylene oxide include ethylene oxide, propylene oxide and butylene oxide, and ethylene oxide is preferable. The mole number of the alkylene oxide added is preferably 1 to 12 moles and more preferably 1 to 8 moles with respect to 1 mole of the alcohol or alkylphenol. When the mole number is within the above-described range, particularly, the detachment is excellent, which is preferable.

Examples of a salt that configures the above-described anionic surfactant include metal salts of sodium, potassium, magnesium, calcium and the like. These salts may be used singly or two or more thereof may be used in combination. Among them, the anionic surfactant is preferably a sulfonate type or a phosphate type and more preferably alkyl sulfonate, polyoxyalkylene alkyl ether sulfonate, polyoxyalkylene alkyl ether phosphate or the like from the viewpoint of the detachability and the re-adhesiveness.

(Cationic surfactant)

Examples of the cationic surfactant include alkylamine salts and quaternary ammonium salts. Specifically, it is possible to use stearylamine acetate, trimethylyacyanmonium chloride, trimethyltallow ammonium chloride, dimethyldioleylammonium chloride, methyloleyldiethanol chloride, tetramethylammonium chloride, laurylpyridinium chloride, laurylpyridinium bromide, laurylpyridinium disulfate, cetylpyridinium bromide, 4-alkyl mercaptopyridine, poly(vinylpyridine)-dodecyl bromide, dodecylbenzyltriethylammonium chloride and the like.

(Amphoteric surfactant)

Examples of the amphoteric surfactant include lauryldimethylaminoacetic acid betaine, 2-alkyl-N-carboxymethyl-N-hydroxyethylimidazolinium betaine, coconut oil fatty acid amidopropyldimethylaminoacetic acid betaine, polyoctylpolyaminoethylglycine and imidazoline derivatives.

These surfactants may be used singly or two or more thereof may be jointly used. The content rate of the surfactant in the detachment liquid is preferably within a range of 0.001 to 10 mass%, more preferably within a range of 0.005 to 7 mass%, still more preferably 0.03 to 5 mass% and far still more preferably 0.05 to 3 mass% based on the mass of the detachment liquid. When the content rate is 0.001 mass% or more, the deinkability is excellent, and it is easy to control the median diameter of the detached printing layer component to be 1 $\mu$m or more, which is preferable, and, a content rate of 10 mass% or less is preferable from the viewpoint of the anti-foaming properties.

[Anti-foaming agent]

In the present invention, it is also preferable that the detachment liquid further contains an anti-foaming agent. When being used in combination with the above-described surfactant, the anti-foaming agent makes it possible to develop favorable anti-foaming properties without degrading the detachability and the re-adhesiveness and to suppress foaming attributed to the surfactant. Examples of the anti-foaming agent include silicone-based compounds and non-silicone-based compounds.

(Silicone-based compound)

Examples of the silicone-based compound include an emulsion type, a self-emulsifying type, an oil type, an oil compound type and a solvent type.

The emulsion type is a silicone-based anti-foaming agent that is an O/W type emulsion obtained by emulsifying a silicone oil compound with an activator, and examples thereof include "KM-89" and "KM-98" manufactured by Shin-Etsu Chemical Co., Ltd., "FC2913" and "SILFOAM SE 47" manufactured by Wacker Asahikasei Silicone Co., Ltd. and "BYK-015" and "BYK-1640" manufactured by BYK Japan KK.

The self-emulsifying type is a silicone-based anti-foaming agent containing 10% of an active ingredient that is put into an emulsion state by being diluted and mixed with water, and examples thereof include "KS-540" and "X-50-1176" manufactured by Shin-Etsu Chemical Co., Ltd. and "SILFOAM SD 670" and "SILFOAM SD 850" manufactured by Wacker Asahikasei Silicone Co., Ltd.

The oil type is a 100% silicone oil anti-foaming agent containing neither a solvent nor an additive, and examples thereof include "KM-89" and "KM-98" manufactured by Shin-Etsu Chemical Co., Ltd., "AK350" and "AK12500" manufactured by Wacker Asahikasei Silicone Co., Ltd. and "BYK-1770" manufactured by BYK Japan KK.

The oil compound type is a silicone-based anti-foaming agent obtained by blending silica particles with a silicone oil, and examples thereof include "KM-89" and "KM-98" manufactured by Shin-Etsu Chemical Co., Ltd., "SILFOAM SC 370" and "PULPSIL 22274 VP" manufactured by Wacker Asahikasei Silicone Co., Ltd. and "BYK-017" and "BYK-018" manufactured by BYK Japan KK.

The solvent type is a silicone-based anti-foaming agent obtained by dissolving a silicone oil in a solvent, and examples thereof include "KM-89" and "KM-98" manufactured by Shin-Etsu Chemical Co., Ltd., "BYK-019" and "BYK-025" manufactured by BYK Japan KK.

(Non-silicone-based compound)

Examples of the non-silicone-based compound include fatty acid ester-based compounds, urea resin-based compounds, paraffin-based compounds, polyoxyalkylene glycol-based compounds, acrylic ester copolymers, ester-based polymers, ether-based polymers, amide-based polymers, emulsion types of a mineral oil, polysiloxane adducts, fluorine-based compounds, vinyl-based polymers, acetylene alcohol, acrylic polymers, special vinyl-based polymers, ethylene glycol and higher alcohols (octyl alcohol, cyclohexanol and the like).

One anti-foaming agent may be used singly or two or more anti-foaming agents may be jointly used. The content rate of the anti-foaming agent in the detachment liquid is preferably within a range of 0.0001 to 5 mass%, more preferably within a range of 0.001 to 4.5 mass%, still more preferably 0.01 to 4 mass%, far still more preferably 0.02 to 3.5 mass% and particularly preferably 0.03 to 3 mass% based on the mass of the detachment liquid. When the content rate is 0.0001 mass% or more, the anti-foaming properties are excellent, and, when the content rate is 5 mass% or less, the deinkability or the re-adhesiveness is excellent.

The anti-foaming agent has favorable alkali resistance and is preferably at least one selected from the group consisting of the emulsion type silicone-based compound, the self-emulsifying type silicone-based compound and the non-silicone-based compound when being combined with the surfactant from the viewpoint of being unlikely to degrade the deinkability or the re-adhesiveness.

[Basic compound]

As described above, as the detachment liquid that is used in the present invention, a basic aqueous solution containing a basic compound is preferably used from the viewpoint of detaching urethane-based adhesive layers that are normally used in packaging materials.

The basic compound is not particularly limited, and, for example, sodium hydroxide (NaOH), potassium hydroxide (KOH), calcium hydroxide (Ca(OH)$_2$), ammonia, barium hydroxide (Ba(OH)$_2$) and sodium carbonate (Na$_2$CO$_3$) are preferably used. At least one selected from the group consisting of sodium hydroxide and potassium hydroxide is more preferable.

The content rate of the basic compound in the basic aqueous solution is preferably 0.5 to 20 mass%, more preferably 1 to 15 mass% and still more preferably within a range of 3 to 15 mass% based on the mass of the basic aqueous solution. When the content rate is within the above-described range, it is possible to hold basicity strong enough to recover the plastic base material by detaching the detachment layer through dissolution or swelling, which will be described below.

The detachment liquid infiltrates into the laminate from the end parts, comes into contact with the detachment layer and dissolves or swells, thereby separating the plastic base material and the detachment layer. Therefore, in order to proceed with a detachment step efficiently, it is preferable that the laminate is cut or crushed to be in a state where the detachment layer is exposed on the cross section at the time of being immersed in the detachment liquid. In such a case, the base material layer can be detached within a shorter time.

At the time of separating the laminate in the detachment liquid, the laminate is preferably 0.1 mass% or more and 10 mass% or less, more preferably 1 mass% or more and 8 mass% or less, still more preferably 1.5 mass% or more and 7 mass% or less and far sill more preferably 2 mass% or more and 6 mass% or less of the total mass of the detachment liquid. A content rate of 0.1 mass% or more is preferable from the viewpoint of the treatment efficiency. A content rate of 10 mass% or less is preferable from the viewpoint of the detachability.

At the time of separating the laminate in the detachment liquid, the printing layer is 0.01 mass% or more, preferably 0.05 mass% or more and 1 mass% or less and more preferably 0.1 mass% or more and 0.5 mass% or less of the total mass of the detachment liquid. A content rate of 0.01 mass% or more is preferable from the viewpoint of the treatment efficiency. A content rate of 1 mass% or less is preferable from the viewpoint of the re-adhesiveness.

At the time of immersing the laminate, the temperature of the detachment liquid is preferably 25°C to 120°C, more preferably 30°C to 120°C and particularly preferably within a range of 30°C to 80°C. The immersion time in the detachment liquid is preferably 1 minute to 24 hours, more preferably 1 minute to 12 hours and still more preferably within a range of 1 minute to 6 hours. In order to improve the detachment efficiency, it is preferable to perform stirring or shaking, circulation or the like on the detachment liquid. The rotation rate is preferably 80 to 5000 rpm and more preferably 80 to 4000 rpm.

A recycled base material can be obtained by performing a step of detaching the detachment layer from the laminate, recovering the plastic base material, and then washing with water and drying the obtained plastic base material. The removal rate of the detachment layer on the surface of the base material is preferably 70% or more, more preferably 80% or more and particularly preferably 90% or more of the area of the detachment layer before the detachment.

In addition, the obtained recycled base material can be reused as a recycled resin by processing the recycled base material into pellets with an extruder or the like.

<Laminate>

The laminate that is used in the present invention includes at least the plastic base material layer and the printing layer. The plastic base material can be recovered and recycled by detaching a layer in contact with the plastic base material with the above-described detachment liquid. In the present invention, the detachment layer is preferably provided in contact with the plastic base material layer in order to improve the detachability.

<Printing layer>

In the present invention, the printing layer is an essential component and may be provided in contact with the plastic base material or may be provided in contact with a primer layer in a case where the laminate has the primer layer. The printing layer is a layer forming an arbitrary printed pattern for the purpose of imparting decoration or a sense of beauty, displaying the contents, a best-before date, a producer or a seller and also includes a solid-printing layer. The printing layer may be formed of a single layer or a plurality of layers. In a case where the printing layer contains a water-soluble resin or a compound having an acidic group, which will be described below, the printing layer also functions as the detachment layer. Printing ink that is used to form the printing layer can be produced by dissolving and/or dispersing at least a colorant, a dispersant and a binder resin in a solvent and may contain other components as necessary.

[Colorant]

The printing layer may be colored or colorless and contains a well-known colorant that is used in printing ink or paint. Such a colorant is not particularly limited, and, aside from an inorganic pigment, an organic pigment and a dye, a metal powder imparting metal luster, a near-infrared-absorbing material or an ultraviolet-absorbing material may be used.

Examples of the inorganic pigment include colored pigments such as titanium oxide, red iron oxide, dark blue, ultramarine, carbon black and graphite; and extender pigments such as calcium carbonate, kaolin, clay, barium sulfate, aluminum hydroxide and talc.

As the organic pigment, a soluble azo pigment, an insoluble azo pigment, an azo lake pigment, a condensed azo pigment, a copper phthalocyanine pigment, a condensed polycyclic pigment and the like are preferably used.

The organic pigment is not limited thereto, and pigments expressed by the Color Index Generic Name can be appropriately used. Among them, in a case where the detachment liquid is a basic aqueous solution, an alkali-resistant pigment that is not eluted in the basic aqueous solution is preferable. Prevention of the elution of the pigment makes it easy to reuse the basic aqueous solution.

The alkali resistance of the pigment is generally estimated by the skeleton or structure of the pigment, examples of the alkali-resistant pigment include inorganic pigments, C. I. Pigment Blue 15 and C.I. Pigment Yellow 83.

In a case where the pigment is titanium oxide, the content rate of titanium oxide is preferably 20 to 80 mass% and more preferably 30 to 75 mass% in the printing layer. In addition, in a case where the pigment is an inorganic pigment excluding titanium oxide, an extender pigment or an organic pigment, the content rate of any of these pigments is preferably 0.5 to 60 mass% and more preferably 10 to 50 mass% in the printing layer.

[Dispersant]

When the printing layer contains a pigment derivative and/or a resin-type dispersant as a dispersant of the colorant, the detachability improves. In addition, it is easy to control the median diameter of the detached printing layer component in the detachment liquid to be 1 $\mu$m or more. Furthermore, the dispersion stability and temporal stability of ink become favorable. These dispersants may be used singly, but the joint use thereof makes the dispersion stability and the temporal stability favorable, which is preferable.

(Pigment derivative)

The pigment derivative is a compound having a substituent introduced into the skeleton of a pigment. In printing ink, the skeleton of the pigment of the pigment derivative is adsorbed to the surface of the pigment in the printing ink, and the substituent part of the pigment derivative is oriented in the solvent in the printing ink, thereby having an action of dispersing the pigment in the ink.

As the pigment derivative, for example, derivatives obtained by adding a functional group such as a carboxyl group, a sulfonic acid group, a carbonyl group or a sulfonyl group to the skeleton of a phthalocyanine-based, azo-based, anthraquinone-based, quinacridone-based or other pigment, salts thereof and the like can be preferably used. These can be used singly or can be used in combination.

As the commercially available products of the pigment derivative, SOLSPERSE 5000, SOLSPERSE 12000 (manufactured by The Lubrizol Corporation), BYK-SYNERGIST 2100, BYK-SYNERGIST 2105 (manufactured by BYK Japan KK), EFKA 6745, EFKA 6750 (manufactured by BASF) and the like can be preferably used. These can be used singly or can be used in combination.

The pigment derivative preferably exhibits an identical or similar color to that of the pigment in the ink. For example, in the case of being added to black ink or cyan ink, a phthalocyanine pigment derivative can be preferably used as the pigment derivative.

The total amount of the pigment derivative is preferably 0.01 to 10 mass%, more preferably 0.05 to 6 mass% and still more preferably 0.1 to 4 mass% of the entire colorant. When the total amount is 0.01 mass% or more, the dispersion stability of the printing ink becomes favorable, and the detachability also improves. In addition, when the total amount is 0.01 to 10 mass%, it is easy to control the median diameter of the detached printing layer component to be 1 $\mu$m or more, and the plastic base material can be recycled as a high-quality material for recycle molding.

(Resin-type dispersant)

The resin-type dispersant is a dispersant that has an affinity part to a pigment composition, which has a property of being adsorbed to the pigment composition, and a part being compatible with a pigment composition carrier and has an action of being adsorbed to the pigment composition to stabilize the dispersion in the pigment composition carrier. As the resin-type dispersant, specifically, polycarboxylic acid esters such as polyurethane and polyacrylate, unsaturated polyamides, polycarboxylic acids, polycarboxylic acid (partial) amine salts, polycarboxylic acid ammonium salts, polycarboxylic acid alkylamine salts, polysiloxanes, long-chain polyaminoamide phosphoric acids salts, hydroxyl group-containing polycarboxylic acid ester, modified products thereof, oil-based dispersants such as amides formed by a reaction between poly (lower alkyleneimine) and a polyester having a free carboxyl group or salts thereof, (meth)acrylate-styrene copolymers, (meth)acrylate-(meth)acrylic acid ester copolymers, water-soluble resins such as styrene-maleic acid copolymers and polyvinyl alcohols or water-soluble polymer compounds, polyester-based dispersants, modified polyacrylate-based dispersants, ethylene oxide/propylene oxide-added compounds, phosphate-based dispersants and the like are used, and these can be used singly or two or more thereof can be mixed together and used, but the form of using the resin-type dispersant is not always limited thereto.

The total amount of the resin-type dispersant is preferably 0.01 to 30 mass%, more preferably 0.05 to 20 mass% and still more preferably 0.1 to 10 mass% of the entire colorant. When the total amount is 0.01 mass% or more, the dispersion stability of the printing ink becomes favorable, and the detachability also improves. Furthermore, it is easy to control the median diameter of the detached printing layer component to be 1 μm or more. In addition, when the total amount is 30 mass% or less, the water resistance of the printing layer becomes favorable.

[Binder resin]

As the binder resin in the printing layer, for example, fiber materials such as nitrocellulose-based materials and cellulose acetate/propionate, chlorinated polypropylene-based binders, vinyl chloride-vinyl acetate copolymer-based binders, polyester-based binders, acrylic binders, urethane resin-based binders, acrylic urethane-based binders, polyamide-based binders, polybutyral-based binders, cyclized rubber-based binders, chlorinated rubber-based binders or binders for which the above-described binders are jointly used as appropriate can be used. In the case of containing a water-soluble resin or a compound having an acidic group, which will be described below, the printing layer also functions as the detachment layer. These resins may be used singly or two or more thereof may be jointly used.

[Primer layer]

The laminate that is used in the present invention may have a primer layer. In a case where the laminate has a primer layer, it is preferable that the primer layer is disposed in contact with the plastic base material, contains a water-soluble resin or a compound having an acidic group and plays a role of detaching the plastic base material through dissolution, peeling or the like using the detachment liquid.

(Water-soluble resin)

The water-soluble resin needs to be a resin that can be swollen or dissolved in water and be detached from the plastic base material. Water may be heated to a temperature of approximately 25°C to 100°C. In such a case, it is possible to detach the primer layer in water (including warm water).
Such a resin can be selected from well-known resins as long as the water solubility is not impaired, and examples thereof include a water-soluble polyester resin, a water-soluble polyamide resin, a water-soluble polyimide resin, a water-soluble acrylic resin, a water-soluble polyurethane resin, a water-soluble polyallylamine resin, a water-soluble phenolic resin, a water-soluble epoxy resin, a water-soluble phenoxy resin, a water-soluble urea resin, a water-soluble melamine resin, a polyvinyl alcohol resin, and modified products of these resins. These can be used singly or two or more thereof can be used in combination. Among them, a polyvinyl alcohol (PVA) resin is preferably used from the viewpoint of easy procurement and the detachability.
In a case where the water-soluble resin has a film-forming property, the water-soluble resin may be used as a binder resin that configures the primer layer.
As the polyvinyl alcohol resin, aside from unmodified polyvinyl alcohols, modified polyvinyl alcohols that are obtained by copolymerizing a variety of monomers at the time of producing a vinyl ester-based resin and saponifying the copolymer or a variety of post-modified polyvinyl alcohols obtained by introducing a variety of functional groups into an unmodified polyvinyl alcohol by post modification may be used. In addition, the polyvinyl alcohol resin may be a resin obtained by performing post-modification on a modified polyvinyl alcohol. The modification can be performed to an extent that the water solubility of the polyvinyl alcohol resin is not impaired.
These resins may be used singly or two or more resins may be jointly used.
Preferable examples of the polyvinyl alcohol resin include resins containing a structural unit having a primary hydroxyl group in a side chain and ethylene-modified polyvinyl alcohol resins. Among these, polyvinyl alcohol resins containing a structural unit having a primary hydroxyl group in a side chain are preferable from the viewpoint of excellent melt moldability and, furthermore, excellent water solubility. The number of the primary hydroxyl groups in such a structural unit is normally 1 to 5, preferably 1 or 2 and more preferably 1. In addition, the polyvinyl alcohol resins preferably have a secondary hydroxyl group aside from the primary hydroxyl group.
The degree of saponification (measured based on JIS K 6726) of the polyvinyl alcohol resin that is used in the present invention is normally 60 to 100 mol%. In addition, a preferable range of the degree of saponification varies with the modified species and is normally 60 to 99.9 mol%, preferably 70 to 99.0 mol% and more preferably 75 to 98.5% in the case of, for example, an unmodified polyvinyl alcohol resin. The degree of saponification of a side chain 1,2-diol structural unit-containing modified polyvinyl alcohol resin is normally 60 to 99.9 mol%, preferably 65 to 99.8 mol% and more preferably 70 to 99.5 mol%. When such a degree of saponification is too low, there is a tendency that the water solubility decreases. The degree of saponification of an ethylene-modified polyvinyl alcohol resin modified with a small amount of ethylene is normally 60 mol% or more, preferably 70 to 99.5 mol% and particularly preferably 75 to 99.0 mol%.
When the degree of saponification is within the above-described range, the water solubility is excellent, and the detachability becomes favorable, which is preferable. In addition, the coatability at the time of forming the primer layer is also excellent, which is preferable.

The average degree of polymerization (measured base on JIS K 6726) of the polyvinyl alcohol resin is normally 100 to 3000, preferably 150 to 2000, more preferably 180 to 1000 and particularly preferably 200 to 800.

[Compound having acidic group]

As the compound having an acidic group, a resin having an acidic group or a low-molecular-weight compound having an acidic group may be used. In such a case, it is possible to detach the primer layer in the above-described basic aqueous solution.

Examples of a resin in the resin having an acidic group include a cellulose-based resin, a urethane resin, a polyamide resin, a vinyl chloride/vinyl acetate copolymer, a ketone resin, a polyester resin and a (meth)acrylic resin. Examples of the acidic group include a carboxy group, a phosphate group, a sulfo group, a sulfino group and the like and an ester or salt thereof.

In addition, as the resin having an acidic group, rosin-modified resins having an acid value such as maleated rosin or fumarated rosin can be used.

In addition, as the resin having an acidic group, it is possible to use radical copolymers such as a styrene-(meth) acrylic resin, a styrene-(anhydrous) maleic acid resin and a terpene-(anhydrous) maleic acid resin or acid-modified polyolefin resins which are obtained by copolymerizing a polymerizable monomer having an acidic group such as a polymerizable monomer having a carboxy group such as itaconic acid, maleic acid, fumaric acid and cinnamic acid; a polymerizable monomer that is an acid anhydride such as itaconic anhydride or maleic anhydride; a polymerizable monomer having a sulfonic acid group such as sulfonated styrene; and a polymerizable monomer having a sulfonamide group such as vinylbenzenesulfonamide.

These may be used singly or two or more thereof may be jointly used.

The low-molecular-weight compound having an acidic group refers to a compound having no molecular weight distributions and having a molecular weight of 1,000 or less. Examples of such a compound include saturated fatty acids such as lauric acid, myristic acid, palmitic acid, margaric acid and stearic acid; unsaturated fatty acids such as oleic acid, linoleic acid, linolenic acid, arachidonic acid, eicosapentaenoic acid, docosahexaenoic acid and sorbic acid; hydroxy acids such as lactic acid, malic acid and citric acid; aromatic carboxylic acids such as benzoic acid, phthalic acid, isophthalic acid, terephthalic acid, salicylic acid, gallic acid, mellitic acid and cinnamic acid; dicarboxylic acids such as oxalic acid, malonic acid, succinic acid, glutaric acid, adipic acid, fumaric acid and maleic acid; tricarboxylic acids such as aconitic acid; oxocarboxylic acids such as pyruvic acid and oxaloacetic acid; carboxylic acid derivatives such as amino acids and nitrocarboxylic acids; and acid anhydrides such as trimellitic anhydride and pyromellitic anhydride.

When the low-molecular-weight compound having an acidic group is used in combination with the above-described resin having an acidic group or a well-known binder resin configuring a well-known primer layer, it is possible to form the primer layer.

The primer layer preferably contains a compound having an acidic group from the viewpoint of appropriate re-coating. In addition, the primer layer preferably contains a urethane resin having an acidic group, an acrylic resin having an acidic group or a rosin-modified resin from the viewpoint of printability.

[Urethane resin having acidic group]

The urethane resin having an acidic group is not particularly limited, and examples thereof include a urethane resin formed by reacting a polyol having an acidic group and a polyisocyanate, a resin formed by acid-modifying a hydroxyl group in the urethane resin formed by reacting a polyol and a polyisocyanate and a resin formed by acid-modifying an amino group in a urethane urea resin formed by reacting a polyamine with an isocyanate group in the urethane resin formed by reacting a polyol and a polyisocyanate.

In addition, as the urethane resin having an acidic group, a resin formed by reacting a polyol containing a hydroxy acid and a polyisocyanate may be used. The use of a hydroxy acid as the polyol makes it possible to impart an acid value derived from a carboxy group to the urethane resin and makes it possible to improve the detachability. In addition, in a case where the urethane resin having an acidic group has an isocyanate group, the urethane resin may be made into a urethane urea by reacting a polyamine with a part of the isocyanate group to introduce a urea bond.

<<Polyol>>

Polyols are a generic term of compounds having at least two hydroxyl groups in one molecule. The number-average molecular weight of a polyol is preferably 500 to 10,000 and more preferably 1,000 to 5,000. The number-average molecular weight is a weight that is calculated from the hydroxyl value of the polyol, and the hydroxyl value refers to a measurement value by JIS K 0070. When the number-average molecular weight of the polyol is 500 or more, the flexibility of the primer layer is excellent, and adhesiveness to the plastic base material improves. When the number-average molecular weight is 10,000 or less, blocking resistance to the plastic base material is excellent.

The polyol is not particularly limited, and, at least one polyol selected from the group consisting of a polyester polyol, a polyether polyol and a polycarbonate polyol is more preferably used. Furthermore, the polyol may further contain a dimer diol, a hydrogenated dimer diol, a castor oil-modified polyol or the like.

That is, the urethane resin preferably contains at least one polyol-derived configuration unit selected from the group consisting of a polyester polyol, a polyether polyol and a polycarbonate polyol. Since the alkali hydrolysis of an ester bond part of a polyester polyol improves the detachability, the urethane resin more preferably contains a polyester polyol-derived configuration unit.

The content rate of the polyol-derived configuration unit is preferably 10 to 75 mass%, more preferably 15 to 70 mass% and still more preferably 20 to 65 mass% of the total amount of the urethane resin. The content rate of the polyester polyol-derived configuration unit is preferably 5 mass% or more, more preferably 30 mass% or more, still more preferably 60 mass% or more and particularly preferably 80 mass% or more of the total amount of the polyol-derived configuration unit.

<<Hydroxy acid>>

The polyol may contain a hydroxy acid. The hydroxy acid refers to a compound having both a hydroxyl group, which is an active hydrogen group, and an acidic functional group in one molecule. The acidic functional group indicates a functional group that can be neutralized by potassium hydroxide at the time of measuring the acid value, specific examples thereof include a carboxy group, a sulfonic acid group and the like, and a carboxy group is preferable. As such a hydroxy acid, for example, dimethylolalkanoic acids such as 2,2-dimethylolpropionic acid, 2,2-dimethylolbutanoic acid and 2,2-dimethylolvaleric acid are preferably used.

<<Polyisocyanate>>

The polyisocyanate is not particularly limited and can be selected from well-known conventional polyisocyanates. A diisocyanate or a triisocyanate is preferably contained, and an aromatic, aliphatic or alicyclic diisocyanate is more preferably contained. These may be used singly or two or more thereof may be jointly used.

<<Polyamine>>

The polyamine used to make the urethane resin into a urethane urea is not particularly limited and is preferably a diamine compound. In addition, a diamine having a hydroxyl group may also be used since the hydroxyl group can be introduced into the urethane resin.

The acid value of the urethane resin having an acidic group is preferably 15 mgKOH/g or higher, more preferably 15 to 70 mgKOH/g and still more preferably 20 to 50 mgKOH/g. When the acid value is 15 mgKOH/g or higher, the detachability with the detachment liquid becomes favorable, which is preferable. When the acid value is 70 mgKOH/g or lower, the base material adhesiveness or the retort resistance becomes favorable, which is preferable. The hydroxyl value of the urethane resin is preferably 15 to 35 mgKOH/g and more preferably 10 to 30 mgKOH/g. When the hydroxyl value is 1 mgKOH/g or higher, the detachability with the detachment liquid becomes favorable, which is preferable. When the hydroxyl value is 35 mgKOH/g or lower, the base material adhesiveness becomes favorable, which is preferable.

The weight-average molecular weight of the urethane resin having an acidic group is preferably 10,000 to 100,000, more preferably 15,000 to 70,000 and still more preferably 15,000 to 50,000. The molecular weight distribution (Mw/Mn) of the urethane resin is preferably 6 or less. Mw indicates the weight-average molecular weight, and Mn indicates the number-average molecular weight. When the molecular weight distribution is 6 or less, the detachability and the drying property and retort resistance of a primer composition are excellent. In addition, as the molecular weight distribution becomes smaller, that is, the molecular weight distribution becomes sharper, the dissolution/peeling action by the detachment liquid occurs more uniformly, and the detachability of the plastic base material further improves. The molecular weight distribution is more preferably 5 or less and still more preferably 4 or less. In addition, the molecular weight distribution is preferably 1.5 or more and more preferably 1.2 or more.

In the present specification, Mw, Mn and the molecular weight distribution (Mw/Mn) are polystyrene-equivalent values obtained by gel permeation chromatography (GPC).

The urethane resin having an acidic group may have an amine value. In a case where the urethane resin has an amine value, the amine value is preferably 0.1 to 20 mgKOH/g and more preferably 1 to 10 mgKOH/g. When the amine value is within the above-described range, the base material adhesiveness is excellent.

The number of urethane bonds in the polyurethane resin having an acidic group is preferably 1 to 3 mmol/g and more preferably 1.5 to 2 mmol/g. In addition, the number of urea bonds is preferably 0 to 3 mmol/g and more preferably 0.2 to 1 mmol/g. In addition, the total of the number of urethane bonds and the number of urea bonds is preferably 1 to 6 mmol/g and more preferably 1.7 to 3 mmol/g.

When the number of urethane bonds and the number of urea bonds are set within the above-described ranges, the detachability and the base material adhesiveness improve.

[Acrylic resin having an acidic group]

Examples of the acrylic resin having an acidic group include polymers obtained by polymerizing a monomer including a (meth)acrylic monomer having an acidic group such as (meth)acrylic acid or a maleic acid; and resins obtained by polymerizing a monomer including a (meth)acrylic monomer having a hydroxyl group or a glycidyl group and then introducing a carboxy group by modifying the functional group (for example, a maleic anhydride-modified resin).

The acid value of the acrylic resin having an acidic group is preferably 50 mgKOH/g or higher and more preferably 100 mgKOH/g or higher.

[Rosin-modified resin]

The rosin-modified resin is a resin prepared using a rosin as one of the raw materials. In a rosin, resin acids such as abietic acid, parastric acid, isopimaric acid and levopimaric acid are contained as a mixture, these resin acids contain a hydrophilic and chemically active carboxy group, and some of them include a conjugated double bond. Therefore, a variety of rosin-modified resins are prepared by polycondensing a combination of polyvalent alcohols or polybasic acids, adding a resole, which is a condensate of phenol, to a benzene ring that is included in the rosin skeleton, causing a Diels-Alder reaction with a maleic anhydride or maleic acid, which is a dienophile, to add maleic acid or a maleic anhydride skeleton or the like. As such rosin-modified resins, a variety of rosin-modified resins are commercially available, and it is also possible to procure and use commercially available products.

Examples of the rosin-modified resin include maleated rosins, fumarized rosins, rosin-modified maleic acid resins, rosin-modified fumaric acid resins, rosin-modified phenolic resins, rosin-modified alkyd resins and rosin-modified polyester resins. In the present invention, any of the rosin-modified resins may be used; however, among these, a rosin-modified resin including a part derived from at least one selected from the group consisting of maleic acid, a maleic anhydride, fumaric acid and a fumaric anhydride in the structure is preferably used. The resin "including a part derived from at least one selected from the group consisting of maleic acid, a maleic anhydride, fumaric acid and a fumaric anhydride in the structure" is a resin prepared using at least one selected from the group consisting of maleic acid, a maleic anhydride, fumaric acid and a fumaric anhydride as a part of the raw materials and means, for example, a rosin-modified maleic acid resin or rosin-modified fumaric acid resin into which maleic acid or fumaric acid has been polycondensed as a part of the polybasic acids, a maleated rosin or fumarized rosin including a structure to which maleic acid, a maleic anhydride, fumaric acid or a fumaric anhydride has been added as a dienophile by a Diels-Alder reaction, a resin obtained by further polymerizing a different chemical species using a functional group that is contained in the above-described resins or the like.

The acid value of the rosin-modified resin is preferably 10 to 400 mgKOH/g and more preferably 100 to 300 mgKOH/g.

(Other components)

The primer layer may contain a resin other than the water-soluble resin or the compound having an acidic group.

Examples of such a resin include a cellulose resin, a polyamide resin, a vinyl chloride resin such as a vinyl chloride-vinyl acetate copolymer resin or a vinyl chloride-acrylic copolymer resin, an ethylene-vinyl acetate copolymer resin, a vinyl acetate resin, an acrylic resin, a styrene resin, a dammar resin, a styrene-acrylic copolymer resin, a polyester resin, an alkyd resin, a terpene resin, a phenol-modified terpene resin, a ketone resin, cyclized rubber, chlorinated rubber, butyral, a polyacetal resin, a petroleum resin and modified resins thereof. These resins may be used singly or two or more thereof may be jointly used.

Among these, the primer layer preferably contains at least one resin selected from the group consisting of a cellulose resin, a vinyl chloride resin, a rosin resin and an acrylic resin. The primer layer more preferably contains a vinyl chloride resin or an acrylic resin.

The mass ratio between the urethane resin having an acidic group and other reins (urethane resin having acidic group:other resins) is preferably 95:5 to 50:50. When the mass ratio is within the above-described range, the printing layer is peeled off in a thin film state and easily recovered at the time of peeling off the printing layer together with the primer layer in the basic aqueous solution, which is preferable.

The primer layer may contain an extender pigment. Examples of the extender pigment include silica, barium sulfate, kaolin, clay, calcium carbonate, magnesium carbonate and metal oxides such as zinc oxide and zirconium oxide. Among these, silica is preferable, and hydrophilic silica is more preferable.

The average particle diameter of the extender pigment is preferably 0.5 to 10 $\mu$m and more preferably 1 to 8 $\mu$m. The content rate of the extender pigment is preferably 0.5 to 10 mass% and more preferably 1 to 5 mass% in the primer layer. When the average particle diameter and the content rate of the extender pigment are within the above-described ranges, the wettability of the printing layer improves, and the image quality improves.

The primer layer may be a layer obtained by crosslinking the above-described urethane resin having an acidic group with a curing agent. When a crosslinked structure is introduced into the primer layer, infiltration into or smearing on the printing layer that is formed on the primer layer is suppressed, and an excellent image quality can be exhibited.

Examples of the curing agent include polyisocyanates. The polyisocyanates are not particularly limited and can be selected from well-known conventional polyisocyanates, and examples thereof include aliphatic polyisocyanates or aromatic aliphatic polyisocyanates. These may be used singly or two or more thereof may be jointly used.

The primer layer may further contain a well-known additive. Examples of the well-known additive include a dispersant, a wetting agent, an adhesion aid, a leveling agent, an anti-foaming agent, an antistatic agent, a viscosity modifier, a metal chelate, a trapping agent, an anti-blocking agent, a wax component other than what has been described above and a silane coupling agent.

The thickness of the primer layer is preferably 0.5 to 3.0 $\mu$m, more preferably 0.6 to 2.0 $\mu$m and still more preferably within a range of 0.8 to 1.5 $\mu$m, and the primer layer can be formed using a well-known method.

[Adhesive layer]

The laminate of the present invention may have an adhesive layer, in a case where the laminate has an adhesive layer, it is preferable that the adhesive layer is disposed in contact with the plastic base material, contains a compound having an acidic group and plays a role of detaching the plastic base material through dissolution, peeling or the like using the detachment liquid. When the adhesive layer contains a resin having an acidic group or a low-molecular-weight compound having an acidic group, it is possible to detach the adhesive layer using the above-described basic aqueous solution.

Regarding the compound having an acidic group, the resin having an acidic group and the low-molecular-weight compound having an acidic group, the description of (Compound having acidic group) in the above-described [Primer layer] section can be applied.

In addition, a method for forming the adhesive layer is not limited, and the adhesive layer can be formed using a well-known method.

The adhesive layer may be a cured product of an adhesive containing a polyester polyol having an acidic group and at least one polyisocyanate selected from the group consisting of an aliphatic polyisocyanate and an aromatic aliphatic polyisocyanate from the viewpoint of the detachability. The cured product corresponds to the resin having an acidic group.

In addition, the adhesive layer may be a cured product of an adhesive containing a polyester polyol, at least one polyisocyanate selected from the group consisting of an aliphatic polyisocyanate and an aromatic aliphatic polyisocyanate and a low-molecular-weight compound having an acidic group.

<Plastic base material layer>

Examples of the plastic base material include a polyolefin resin, a polyester resin, a polyamide resin, a polystyrene resin, a vinyl chloride resin, a vinyl acetate resin, an ABS resin, an acrylic resin, an acetal resin, a polycarbonate resin, a polyvinyl alcohol resin and cellulose plastic.

The plastic base material is preferably a polyolefin base material containing a polyolefin resin from the viewpoint of being reused as a recycled base material. Examples of such a base material containing a polyolefin resin include, aside from plastic base materials such as polyethylene (PE) and biaxially oriented polypropylene (OPP), sealant base materials such as a low-density polyethylene (LDPE), a linear low-density polyethylene (LLDPE), a high-density polyethylene (HDPE), an acid-modified polyethylene, an unoriented polypropylene (CPP), an acid-modified polypropylene and a copolymerized polypropylene.

The thickness of the plastic base material layer is not particularly limited and may be selected as appropriate depending on the application. The thickness is preferably 5 to 200 $\mu$m and more preferably 10 to 150 $\mu$m. In addition, examples of a gas barrier base material include an aluminum foil, a metal (aluminum)-deposited layer and a metal oxide (silica or alumina)-deposited layer. The thickness of the aluminum foil is often used within a range of 3 to 50 $\mu$m in terms of an economic aspect. In addition, the aluminum foil, the aluminum-deposited layer and the alumina-deposited layer are dissolved in the basic aqueous solution and detached and thus function as the detachment layer and are capable of separating the adjacent polyolefin resin.

Hereinafter, an example of the laminate configuration of the present invention will be described, but the laminate configuration is not limited thereto. In addition, in the following configuration, "base material layer" does not need to be a single layer and may be a laminate in which a plurality of base materials is laminated together.

- · Plastic base material layer/printing layer
- · Plastic base material layer/primer layer/printing layer
- · Plastic base material layer/printing layer/adhesive layer/plastic base material layer
- · Plastic base material layer/primer layer/printing layer/adhesive layer/plastic base material layer
- · Base material layer/printing layer/adhesive layer/plastic base material layer
- · Plastic base material layer/primer layer/printing layer/adhesive layer/deposited layer/plastic base material layer

<Method for producing molding material>

A molding material can be produced by melt-kneading the plastic base material recovered by the above-described separation and recovery method. The method for producing a molding material of the present invention preferably includes the following steps 1 to 3. In a case where the molding material contains a masterbatch, the method may further include a step 4.

(Step 1) A step of crushing the laminate, immersing the laminate in the detachment liquid and detaching the plastic base material from the laminate
(Step 2) A step of washing the plastic base material obtained in the step 1 with water
(Step 3) A step of melt-kneading the plastic base material obtained in the step 2 to obtain a recycled resin
(Step 4) A step of mixing a masterbatch with the recycled resin obtained in the step 3

A method for crushing a packaging material in the step 1 is not particularly limited, and examples thereof include methods in which a jaw crusher, an impact crusher, a cutter mill, a stamp mill, a ring mill, a roller mill, a jet mill or a hammer mill is used.
The step 2 may further include a drying step as necessary. The step 2 makes it possible to obtain a base material after recycling (also referred to as the recycled plastic base material).
The melt-kneading step in the step 3 refers to the addition of a variety of additives or the like as necessary, mixing with a Henschel mixer, a tumbler, a disperser or the like and then mixing or dispersion using a batch-type kneader, a twin screw extruder, a single screw extruder, a rotor-type twin screw kneader or the like. This makes it possible to obtain a recycled resin, which is a resin composition. The shape of the recycled resin is not particularly limited and may be a pellet shape, a powder shape, a granule shape or a bead shape. In the melt-kneading step, a twin screw extruder is preferably used.

[Masterbatch]

The molding material of the present invention may further contain a masterbatch. The masterbatch is not particularly limited as long as the masterbatch is compatible with recycled resins, and, ordinarily, it is possible to use a masterbatch obtained by kneading a thermoplastic resin such as a polyethylene resin or a polypropylene resin and a colorant. In the masterbatch, one thermoplastic resin may be singly used or two or more thermoplastic resins may be jointly used.
The masterbatch in the present invention may also contain a metal soap of an alkali metal, an alkali earth metal or zinc, hydrotalcite, a nonionic surfactant, a cationic surfactant, an anionic surfactant, an amphoteric surfactant, an antistatic agent, a halogen-based flame retarder, a phosphorus-based flame retarder or a flame retarder such as a metal oxide, a lubricant such as ethylene bisalkyl amide, an antioxidant, an ultraviolet absorber or a filler to an extent that the effect of the present invention is not impaired.

<Molded body>

A molded body can be obtained by heat-molding the molding material that is obtained by the above-described production method. A heat molding method is not particularly limited, and examples thereof include injection molding, extrusion molding, blow molding and compression molding.
A molding material produced using a plastic base material recovered by the separation and recovery method of the present invention has a high quality since a detachment layer is detached and, furthermore, re-adhesion of a detached component is suppressed. Therefore, the molding material can be used in a variety of fields such as home appliances, stationery, automotive parts, toys and sports equipment and materials for medical or architecture/construction materials.

Examples

Hereinafter, the present invention will be described in detail using examples, but the present invention is not limited to these examples. "Parts" and "%" in the present invention indicate "parts by mass" and "mass%", respectively, unless particularly otherwise noted.

<Molecular weight and molecular weight distribution>

Weight-average molecular weights (Mw), number-average molecular weights (Mn) and molecular weight distributions (Mw/Mn) were measured by gel permeation chromatography (GPC) and obtained as molecular weights converted using polystyrene as a standard substance. Measurement conditions are as described below.

GPC device: Shodex GPC-104 manufactured by Showa Denko K.K.
Column: The following columns were connected in series and used.
Two Shodex LF-404 manufactured by Showa Denko K.K.
Shodex LF-G manufactured by Showa Denko K.K.
Detector: RI (differential refractometer)
Measurement condition: Column temperature of 40°C
Eluent: Tetrahydrofuran
Flow rate: 0.3 mL/minute

<Acid value and hydroxyl value>

Acid values and hydroxyl values were measured according to a method described in JIS K 0070 (1992).

<Production of primer composition and resin for printing ink>

[Synthesis Example 1-1] (Polyurethane resin P1)

While a nitrogen gas was introduced into a reactor including a reflux cooling tube, a dropping funnel, a gas introduction tube, a stirring device and a thermometer, 152.2 parts of PPA (polyester polyol being composed of a polycondensate of propylene glycol and adipic acid and having a number-average molecular weight of 2,000), 15.2 parts of PPG (polyester polyol being composed of polypropylene glycol and having a number-average molecular weight of 2,000), 13.6 parts of BD (1,4-butanediol), 99.8 parts of IPDI (isophorone diisocyanate) and 200 parts of NPAC (N-propyl acetate) were charged thereinto and reacted at 90°C for 5 hours, thereby obtaining a urethane prepolymer solution having an isocyanate group at an end.
Next, a mixture of 19.2 parts of AEA (2-(2-aminoethylamino)ethanol) and 350 parts of IPA (isopropyl alcohol) was added dropwise thereto at room temperature for 60 minutes and reacted at 70°C for 3 hours, thereby obtaining a polyurethane resin solution.
A solid content was prepared by adding NPAC to the obtained polyurethane resin solution, and a solution of a polyurethane resin P1 having a solid content concentration of 30%, a weight-average molecular weight of 27,000, Mw/Mn of 3.1 and an acid value of 0.0 mgKOH/g was obtained.

[Synthesis Example 1-2] (Polyurethane resin P2)

While a nitrogen gas was introduced into a reactor including a reflux cooling tube, a dropping funnel, a gas introduction tube, a stirring device and a thermometer, 135.7 parts of PPA, 13.6 parts of PPG, 28.3 parts of DMPA (2,2-dimethylolpropionic acid), 105.7 parts of IPDI and 200 parts of NPAC were charged thereinto and reacted at 90°C for 5 hours, thereby obtaining a urethane prepolymer solution having an isocyanate group at an end.
Next, a mixture of 16.7 parts of AEA and 350 parts of IPA was added dropwise thereto at room temperature for 60 minutes and reacted at 70°C for 3 hours, thereby obtaining a polyurethane resin solution.
A solid content was prepared by adding NPAC to the obtained polyurethane resin solution, and a solution of a polyurethane resin P2 having a solid content concentration of 30%, a weight-average molecular weight of 30,000, Mw/Mn of 3.0 and an acid value of 39.3 mgKOH/g was obtained.

<Production of composition for forming primer layer>

[Production Example 1-1] (Primer composition S1)

87 Parts of a polyurethane resin P2 solution, 5 parts of EA, 5 parts of IPA and 3 parts of silica particles (P-73 manufactured by Mizusawa Industrial Chemicals, Ltd.: hydrophilic silica particles having an average particle diameter of 3.8 μm) were stirred and mixed using a disperser, thereby obtaining a primer composition S1.

<Production of printing ink>

[Production Example 2-1] (Printing ink R1)

10 Parts of an indigo pigment P. B. 15 (C. I. Pigment Blue 15), 25 parts of a polyurethane resin P1 solution, 5 parts by a PVD solution (vinyl chloride-vinyl acetate copolymer resin solution (SOLBIN TAO manufactured by Nissin Chemical Industry Co., Ltd., solid content: 30 %, EA solution)), 10 parts of EA and 10 parts of IPA were mixed and kneaded together, and a dispersion treatment was performed thereon for 20 minutes using a sand mill as a bead mill. After that, 20 parts of the polyurethane resin P1 solution, 10 parts of EA and 10 parts of IPA were mixed and stirred together to obtain a printing ink R1. In Table 1, the amounts of the elements blended in the total of blending during dispersion and post blending were shown.

[Production Examples 2-2 to 6] (Printing inks R2 to R6)

Printing inks R2 to R6 were obtained by the same method as in Ink Production Example 2-1 except that raw materials and formulation proportions shown in Table 1 were used. The amounts blended in Table 1 are the total of blending during dispersion and post blending. The amounts blended during dispersion were adjusted so that the resin solution during post blending became 20 parts.

[Table 1]

| Table 1. Printing ink | | Pigment | Dispersant | | Binder resin | | | Solvent | | Total | Mass percent of pigment derivative relative to colorant |
|---|---|---|---|---|---|---|---|---|---|---|---|
| | | Indigo | SYNERGIST 2100 | BYK-142 | Urethane resin solution | | PVC solution | EA | IPA | | |
| | | P.B. 15 | | | P1 | P2 | | | | | |
| Production Example 2-1 | R1 | 10 | | | 45 | | 5 | 20 | 20 | 100 | 0.0% |
| Production Example 2-2 | R2 | 10 | | 0.5 | 44.5 | | 5 | 20 | 20 | 100 | 0.0% |
| Production Example 2-3 | R3 | 10 | 0.001 | 0.5 | 44.499 | | 5 | 20 | 20 | 100 | 0.01% |
| Production Example 2-4 | R4 | 10 | 0.2 | 0.5 | 44.3 | | 5 | 20 | 20 | 100 | 2.0% |
| Production Example 2-5 | R5 | 10 | 1.1 | 0.5 | 43.4 | | 5 | 20 | 20 | 100 | 11.0% |
| Production Example 2-6 | R6 | 10 | 0.2 | 0.5 | | 44.3 | 5 | 20 | 20 | 100 | 2.0% |

Abbreviations in Table 1 will be described below. P. B. 15: C. I. Pigment Blue 15 SYNERGIST 2100: pigment derivative, BYK-SYNERGIST 2100 manufactured by BYK Japan KK BYK-142: resin-type dispersant, DISPER BYK-142 manufactured by BYK Japan KK PVC solution: vinyl chloride-vinyl acetate copolymer resin solution, SOLBIN TAO manufactured by Nissin Chemical Industry Co., Ltd. (solid content: 30 %, EA solution) EA: ethyl acetate IPA: isopropyl alcohol

<Production of polyols used in adhesives>

[Synthesis Example 2-1] (Polyester polyol B1)

124 Parts of ethylene glycol, 212 parts of neopentyl glycol, 368 parts of 1,6-hexanediol, 645 parts of isophthalic acid, 36 parts of adipic acid and 265 parts of sebacic acid were charged into a reaction container including a stirrer, a thermometer, a reflux cooling tube, a dropping funnel and a nitrogen gas introduction tube and heated up to 250°C while being stirred under a nitrogen flow to perform an esterification reaction. A predetermined amount of water was distilled away, the reaction was continued until the acid value became 5 or less, then, the pressure was slowly reduced to perform a deglycol reaction at 1 mmHg or lower for 5 hours, thereby obtaining a polyester polyol. After that, 35 parts of isophorone diisocyanate was slowly added thereto, and a reaction was performed at 150°C for approximately 2 hours, thereby obtaining a polyester polyurethane polyol. 12.0 Parts of ethylene glycol bis-anhydro trimellitate was added to 100 parts of this polyester polyurethane polyol, reacted at 180°C for approximately 2 hours and then diluted with ethyl acetate until the solid content concentration became 50%, thereby obtaining a solution of a partially acid-modified polyester polyol B1 having a number-average molecular weight of 9,000 and an acid value of 30.3 mgKOH/g.

[Synthesis Example 2-2] (Polyester polyol B2)

58 Parts of ethylene glycol, 412 parts of diethylene glycol, 343 parts of neopentyl glycol, 517 parts of isophthalic acid and 393 parts of adipic acid were charged into a reaction container including a stirrer, a thermometer, a reflux cooling tube, a dropping funnel and a nitrogen gas introduction tube and heated up to 250°C while being stirred under a nitrogen flow to perform an esterification reaction. A predetermined amount of water was distilled away, the reaction was continued until the acid value became 5 or less, then, the pressure was slowly reduced to perform a deglycol reaction at 1 mmHg or lower for 5 hours, thereby obtaining a polyester polyol. 4.0 Parts of trimellitic anhydride was added to 100 parts of this polyester polyol, reacted at 180°C for approximately 2 hours and then diluted with ethyl acetate until the solid content concentration became 50%, thereby obtaining a solution of a partially acid-modified polyester polyol B2 having a number-average molecular weight of 2,000 and an acid value of 23.5 mgKOH/g.

<Adjustment of polyisocyanate>

[Preparation Example 1] (Polyisocyanate C1)

CORONATE 2785 (biuret-type polyisocyanate derived from hexamethylene diisocyanate, manufactured by Tosoh Corporation) was diluted with ethyl acetate to adjust the solid content concentration to 50% and NCO% to 9.6%, thereby obtaining a solution of a polyisocyanate C1.

<Production of adhesives>

[Production Example 3-1] (Adhesive D1)

90 Parts of a polyester polyol B1 solution, 10 parts of a polyester polyol B2 solution and 8 parts of a polyisocyanate C1 solution were blended together, and EA was added thereto, thereby adjusting an adhesive solution having a solid content concentration of 30%.

<Production of laminates>

Hereinafter, a method for producing a laminate will be described. The primer composition and the printing ink were each used after being diluted using a solvent mixture of EA/IPA (mass ratio: 70/30) so that the viscosity became 15 seconds (25°C, Zahn cup #3 (manufactured by RIGO Co., Ltd.)). In addition, the thicknesses of a primer layer and a printing layer were each adjusted to become approximately 1.5 $\mu$m.

[Production Example 4-1] (Laminate L1)

The diluted primer composition S1 and printing ink R1 were printed in the stated order on OPP (corona-treated stretched polypropylene film, thickness: 20 µm) using a gravure printing machine including a gravure cylinder having a cell depth of 30 µm and dried at 50°C, thereby obtaining a laminate having a configuration of OPP/S1/R1.

Next, the adhesive D1 was applied onto and dried on the printing layer of the obtained laminate using a dry laminating machine so that the dried film thickness became approximately 3 µm, and then pasted to CPP (unstretched polypropylene film thickness 50 µm), thereby obtaining a laminate L1 having a configuration of a base material layer (OPP)/the primer layer (S1)/the printing layer (R1)/the adhesive layer (D1)/a base material layer (CPP).

[Production Examples 4-2 to 5] (Laminates L2 to L5)

Laminates L2 to L5 were obtained by the same method as in Production Example 4-1 except that the printing ink was changed to the contents shown in Table 2.

[Production Example 4-6] (Laminate L6)

The diluted primer composition S1 and printing ink R3 were printed in the stated order on OPP using a gravure printing machine including a gravure cylinder having a cell depth of 30 µm and dried at 50°C, thereby obtaining a laminate L6 having a configuration of a base material layer (OPP)/the primer layer (S1)/the printing layer (R3).

[Production Example 4-7] (Laminate L7)

The diluted printing ink R3 was printed on OPP using a gravure printing machine including a gravure cylinder having a cell depth of 30 µm and dried at 50°C, thereby obtaining a laminate L7 having a configuration of a base material layer (OPP)/the printing layer (R3).

[Production Example 4-8] (Laminate L8)

A laminate L8 was obtained by the same method as in Production Example 4-7 except that the printing ink was changed to the contents shown in Table 2.

[Table 2]

| Table 2. Laminate | | | | | | |
|---|---|---|---|---|---|---|
| | | Base material 1 | Primer | Ink | Adhesive | Base material 2 |
| Production Example 4-1 | L1 | OPP | S1 | R1 | D1 | CPP |
| Production Example 4-2 | L2 | OPP | S1 | R2 | D1 | CPP |
| Production Example 4-3 | L3 | OPP | S1 | R3 | D1 | CPP |
| Production Example 4-4 | L4 | OPP | S1 | R4 | D1 | CPP |
| Production Example 4-5 | L5 | OPP | S1 | R5 | D1 | CPP |
| Production Example 4-6 | L6 | OPP | S1 | R3 | - | - |
| Production Example 4-7 | L7 | OPP | - | R3 | - | - |
| Production Example 4-8 | L8 | OPP | - | R5 | - | - |

Abbreviations in Table 2 will be described below. OPP: corona-treated stretched polypropylene film, thickness: 20 µm CPP: unstretched polypropylene film, thickness 50 µm

<Production of detachment liquid>

[Production Example 5-1] (Detachment liquid A1)

Two parts of sodium hydroxide and 98 parts of water were blended together and stirred with a disperser, thereby obtaining a detachment liquid A1.

[Production Examples 5-2 to 4] (Detachment liquids A2 to A4)

Detachment liquids A2 to A4 were obtained by the same method as in Production Example 5-1 except that, in addition to sodium hydroxide and water, POE stearyl ether (the number of POE added; 12, HLB; 13.9) as a surfactant and BYK-1650 (manufactured by BYK Japan KK, silicone-based emulsion-type anti-foaming agent, solid content concentration: 27.5%) as an anti-foaming agent were blended according to blending compositions shown in Table 3.

[Table 3]

| Table 3. Detachment liquid | | Surfactant | Anti-foaming agent | Sodium hydroxide | Water | Total |
|---|---|---|---|---|---|---|
| Production Example 5-1 | A1 | | | 2 | 98 | 100 |
| Production Example 5-2 | A2 | 0.001 | | 2 | 97.999 | 100 |
| Production Example 5-3 | A3 | 0.1 | 0.01 | 2 | 97.89 | 100 |
| Production Example 5-4 | A4 | 10 | 0.1 | 2 | 87.9 | 100 |

<Separation and recovery of laminate>

[Example 1]

500 g of the detachment liquid A3 and 20 g of a sample obtained by cutting out the laminate L4 to sizes of 1 cm × 1 cm were put into a 1000 mL stainless steel beaker and stirred under conditions of 70°C and 2000 rpm. The separation and recovery state of the laminate was evaluated as described below.

[Examples 2 to 13 and Comparative Examples 1 to 4]

In addition, the separation and recovery states of the laminates were evaluated by the same methods as in Example 1 except that the amounts of the laminate and the printing layer relative to the detachment liquid and the stirring rate were changed to the contents shown in Table 4. 0.2 g of the laminate of Comparative Example 4 corresponds to 100 samples obtained by cutting out the laminate L4 to sizes of 1 cm × 1 cm.
The results are shown in Table 4. The amounts of the laminates, the printing layers and the films relative to the detachment liquids were calculated with an assumption that the densities of the primer layer, the printing layer and the adhesive layer were 1 g/cm$^3$ and the densities of the OPP base material and the CPP base material were 0.91 g/cm$^3$.

<Evaluation of laminates>

<Detachability>

The base material was sampled when 15 minutes, 30 minutes and 1 hour had elapsed from the beginning of stirring, respectively, and washed with water and dried. Ten pieces of the OPP base material were sampled from the obtained base material, and the removal rates of the printing layer were visually confirmed and evaluated by the following standards.

A (Excellent): In the base material for which 15 minutes has elapsed from the beginning of stirring, 90% or more of the printing layer has peeled off.
B (Favorable): In the base material for which 30 minutes has elapsed from the beginning of stirring, 90% or more of the printing layer has peeled off.
C (Available): In the base material for which 1 hour has elapsed from the beginning of stirring, 90% or more of the printing layer has peeled off.
D (Unavailable): In the base material for which 1 hour has elapsed from the beginning of stirring, 90% or more of the printing layer has not peeled off.

(Re-adhesiveness)

After 2 hours from the beginning of stirring, the detached base material was recovered with a sieve having a mesh size of 1 mm, washed with water and dried. Ten pieces of the OPP base material were sampled from the obtained base material, the 10 base material pieces were overlapped together, and the color value L*x, a*x, b*x was measured with a spectrophotometer (manufactured by X-rite, Inc., X-rite eXact).

For the OPP base material before printing as well, similarly, OPP (20 g) cut out to sizes of 1 cm × 1 cm was immersed in the detachment liquid A3 (500 g), stirred at 70°C and 2000 rpm for 2 hours, washed with water and dried, then, 10 pieces were sampled, the 10 base material pieces were overlapped together, and the color value L*y, a*y, b*y was measured. The color difference ΔE was obtained by the following calculation formula, and the re-adhesiveness was evaluated by the following standards.

$$(\text{Formula}) \; \Delta E = ((L^*x - L^*y)^2 + (a^*x - a^*y)^2 + (b^*x - b^*y)^2)^{1/2}$$

A (Excellent): ΔE is less than 3
B (Favorable): ΔE is 3 or more and less than 10
C (Available): ΔE is 10 or more and less than 20
D (Unavailable): Other than A to C

(Particle sizes of detached printing layer component)

After 2 hours of stirring from the beginning of the stirring, the detached base material was removed with a sieve having a mesh size of 1 mm, and the detachment liquid in which the detached printing layer component was dispersed was recovered. The particle size distribution of the detachment liquid was measured with a particle size distribution analyzer of a laser diffraction/scattering method (manufactured by MicrotracBEL Corp., MICROTRAC MT-3000EX (II). A 2% sodium hydroxide aqueous solution was used as a dispersion medium. The 10 vol% diameter (D10), the median diameter (50 vol% diameter, D50) and the 90 vol% diameter (D90) were obtained from the obtained volume frequency particle size distribution curve, and the span value A ((D90 - D10)/D50) of the particle size distribution was obtained from the obtained value.

(Treatment efficiency)

After 2 hours from the beginning of the stirring, the detached OPP base material and CPP base material were recovered, washed with water and dried, then, the weights of the recovered base materials were measured, and the amounts relative to the charged detachment liquid were obtained and evaluated by the following standards.

A (Excellent): The amount of the recovered base material relative to the charged detachment liquid is 3% or more
B (Favorable): The amount of the recovered base material relative to the charged detachment liquid is 1% or more and less than 3%
C (Available): The amount of the recovered base material relative to the charged detachment liquid is 0.1% or more and less than 1%
D (Unavailable): The amount of the recovered base material relative to the charged detachment liquid is less than 0.1%

(Production of recycled film and evaluation of transmittance)

After 2 hours from the beginning of the stirring, the detached OPP base material and CPP base material were recovered, washed with water and dried, then, the recovered base materials were extruded with a single screw extruder at 200°C and subjected to a pelletizing step, thereby obtaining pellets of a recycled resin. The recycled resin was extruded with a T-die film molding machine at 200°C to fabricate a recycled film having a thickness of 50 μm.

The haze of the recycled film was measured using a haze meter (manufactured by Nippon Denshoku Industries Co., Ltd., SH7000) and evaluated by the following standards.

A (Excellent): The haze is 20% or less
B (Favorable): The haze is 20% or more and less than 40%
C (Available): The haze is 40% or more and less than 60%
D (Unavailable): The haze is 60% or more

[Table 4]

| Table 4. Deinking test | | | | | | | | | | | | | | |
|---|---|---|---|---|---|---|---|---|---|---|---|---|---|---|
| | Deinking test conditions | | | | | | | | Evaluation | | | | | |
| | Laminate | | Treatment liquid | | Amount relative to detachment liquid (%) | | | Stirring rate (rpm) | Median diameter D50 ($\mu$m) | Span value A | Detachability | Re-adhesiveness | Treatment efficiency | Recycled material haze |
| | Kind | Amount blended | Kind | Amount blended | Laminate | Printing layer | Film | | | | | | | |
| Example 1 | L4 | 20 | A3 | 500 | 4 | 0.12 | 3.53 | 2000 | 58 | 2.3 | A | A | A | A |
| Example 2 | L1 | 20 | A3 | 500 | 4 | 0.12 | 3.53 | 2000 | 32 | 4.0 | C | B | A | B |
| Example 3 | L2 | 20 | A3 | 500 | 4 | 0.12 | 3.53 | 2000 | 68 | 3.6 | C | B | A | B |
| Example 4 | L3 | 20 | A3 | 500 | 4 | 0.12 | 3.53 | 2000 | 62 | 2.8 | B | A | A | A |
| Example 5 | L5 | 20 | A3 | 500 | 4 | 0.12 | 3.53 | 2000 | 2 | 9.8 | A | C | A | C |
| Example 6 | L4 | 2.5 | A3 | 500 | 0.5 | 0.015 | 0.44 | 2000 | 95 | 3.8 | B | A | C | A |
| Example 7 | L4 | 20 | A1 | 500 | 4 | 0.12 | 3.53 | 2000 | 7 | 5.1 | C | C | A | C |
| Example 8 | L4 | 20 | A2 | 500 | 4 | 0.12 | 3.53 | 2000 | 22 | 2.9 | B | B | A | B |
| Example 9 | L4 | 20 | A4 | 500 | 4 | 0.12 | 3.53 | 1000 | 103 | 2.7 | B | A | A | A |
| Example 10 | L5 | 20 | A1 | 500 | 4 | 0.12 | 3.53 | 500 | 5 | 11.9 | C | C | A | C |
| Example 11 | L6 | 7.5 | A3 | 500 | 1.5 | 0.11 | 1.29 | 2000 | 45 | 2.8 | A | A | B | A |
| Example 12 | L7 | 7.5 | A3 | 500 | 1.5 | 0.11 | 1.38 | 2000 | 64 | 3.5 | B | A | B | A |
| Example 13 | L8 | 7.5 | A3 | 500 | 1.5 | 0.11 | 1.38 | 2000 | 12 | 4.1 | B | B | B | B |
| Comparative Example 1 | L5 | 20 | A1 | 500 | 4 | 0.12 | 3.53 | 2000 | 0.4 | 24.8 | B | D | A | D |
| Comparative Example 2 | L1 | 20 | A1 | 500 | 4 | 0.12 | 3.53 | 2000 | 0.7 | 9.7 | D | D | A | D |
| Comparative Example 3 | L4 | 20 | A3 | 500 | 4 | 0.12 | 3.53 | 4000 | 0.8 | 5.8 | A | D | A | D |
| Comparative Example 4 | L4 | 0.2 | A3 | 500 | 0.04 | 0.001 | 0.035 | 2000 | 182 | 2.6 | A | A | D | A |

The above-described evaluation results showed that, according to the separation and recovery method of the present invention, even in a case where the amount of a laminate to be treated is large, a printing layer can be easily detached from the laminate, a high-quality recycled base material in which re-adhesion of a printing layer is less likely can be obtained, and, furthermore, a high-quality molding material in which coloration is less likely can be obtained.

In the embodiment of the present invention, for example, the following items are provided.

(Item 1)

A method for separating and recovering a laminate, the method including a step of immersing a laminate including at least a plastic base material layer and a printing layer in a detachment liquid to detach the printing layer so that a volume-based median diameter (D50) of a printing layer component detached from the plastic base material layer becomes 1 $\mu$m or more and recovering a plastic base material, in which the printing layer is 0.01 mass% or more of a total mass of the detachment liquid.

(Item 2)

The method for separating and recovering a laminate according to Item 1, in which a span value A represented by the following calculation equation of the detached printing layer component is 10 or less.

$$A = (D90 - D10)/D50$$

D10: A cumulative 10% diameter of a volume-based particle size distribution that is obtained by laser diffraction-type particle size distribution measurement of the detached printing layer component
D90: A cumulative 90% diameter of the volume-based particle size distribution that is obtained by the laser diffraction-type particle size distribution measurement of the detached printing layer component

(Item 3)

The method for separating and recovering a laminate according to Item 1 or 2, in which the plastic base material layer is a polyolefin base material.

(Item 4)

The method for separating and recovering a laminate according to any one of Items 1 to 3, in which the detachment liquid contains water and a surfactant, and a content rate of the surfactant is 0.001 mass% or more of a total mass of the detachment liquid.

(Item 5)

The method for separating and recovering a laminate according to any one of Items 1 to 4, in which the printing layer contains a colorant, a binder resin and a dispersant, and a content rate of the dispersant is 0.01 mass% or more of a total mass of the colorant.

(Item 6)

The method for separating and recovering a laminate according to Item 5, in which the dispersant contains a pigment derivative and/or a resin-type dispersant.

(Item 7)

The method for separating and recovering a laminate according to Item 5 or 6, in which the dispersant contains a pigment derivative, and a content rate of the pigment derivative is 0.01 to 10 mass% of the total mass of the colorant.

(Item 8)

The method for separating and recovering a laminate according to any one of Items 1 to 7, in which the laminate is 1.5 mass% or more of the total mass of the detachment liquid.

(Item 9)

The method for separating and recovering a laminate according to any one of Items 1 to 8, in which the detachment liquid contains a basic aqueous solution, and the method further includes a step of detaching the printing layer in the basic aqueous solution and recovering the plastic base material.

(Item 10)

A method for producing a molding material, in which a plastic base material recovered by the method for separating and recovering a laminate according to any one of Items 1 to 9 is melt-kneaded.

(Item 11)

A method for producing a molded body, in which a molding material that is obtained by the production method according to Item 10 is heat-molded.

The disclosure of the present application is related to the subject of Japanese Patent Application No. 2022-106918, filed in Japan on July 1, 2022, all the contents of which is incorporated herein by reference.

**Claims**

1.  A method for separating and recovering a laminate, the method comprising:

    a step of immersing a laminate including at least a plastic base material layer and a printing layer in a detachment liquid to detach the printing layer so that a volume-based median diameter (D50) of a printing layer component detached from the plastic base material layer becomes 1 $\mu$m or more and recovering a plastic base material, wherein the printing layer is 0.01 mass% or more of a total mass of the detachment liquid.

2.  The method for separating and recovering a laminate according to Claim 1,

    wherein a span value A represented by the following calculation equation of the detached printing layer component is 10 or less,

    $$A = (D90 - D10)/D50$$

    D10: A cumulative 10% diameter of a volume-based particle size distribution that is obtained by laser diffraction-type particle size distribution measurement of the detached printing layer component, and
    D90: A cumulative 90% diameter of the volume-based particle size distribution that is obtained by the laser diffraction-type particle size distribution measurement of the detached printing layer component.

3.  The method for separating and recovering a laminate according to Claim 1 or 2,
    wherein the plastic base material layer is a polyolefin base material.

4.  The method for separating and recovering a laminate according to Claim 1 or 2,
    wherein the detachment liquid contains water and a surfactant, and a content rate of the surfactant is 0.001 mass% or more of a total mass of the detachment liquid.

5.  The method for separating and recovering a laminate according to Claim 1 or 2,
    wherein the printing layer contains a colorant, a binder resin and a dispersant, and a content rate of the dispersant is 0.01 mass% or more of a total mass of the colorant.

6.  The method for separating and recovering a laminate according to Claim 5,
    wherein the dispersant contains a pigment derivative and/or a resin-type dispersant.

7.  The method for separating and recovering a laminate according to Claim 6,

wherein the dispersant contains a pigment derivative, and a content rate of the pigment derivative is 0.01 to 10 mass% of the total mass of the colorant.

8. The method for separating and recovering a laminate according to Claim 1 or 2,
   wherein the laminate is 1.5 mass% or more of the total mass of the detachment liquid.

9. The method for separating and recovering a laminate according to Claim 1 or 2,
   wherein the detachment liquid contains a basic aqueous solution, and the method further comprises a step of detaching the printing layer in the basic aqueous solution and recovering the plastic base material.

10. A method for producing a molding material,
    wherein a plastic base material recovered by the method for separating and recovering a laminate according to Claim 1 or 2 is melt-kneaded.

11. A method for producing a molded body,
    wherein a molding material that is obtained by the production method according to Claim 10 is heat-molded.

## INTERNATIONAL SEARCH REPORT

International application No.

**PCT/JP2023/023287**

### A. CLASSIFICATION OF SUBJECT MATTER

***B29B 17/00***(2006.01)i; ***B32B 27/00***(2006.01)i
FI:   B29B17/00 ZAB; B32B27/00 E

According to International Patent Classification (IPC) or to both national classification and IPC

### B. FIELDS SEARCHED

Minimum documentation searched (classification system followed by classification symbols)

B29B17/00; B32B27/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2021/230032 A1 (DIC CORP.) 18 November 2021 (2021-11-18) claims, paragraphs [0004], [0009], [0079], [0083], [0115], examples | 1, 3-4, 8-11 |
| Y | | 4-7 |
| A | | 2 |
| X | JP 2022-510105 A (SKC CO., LTD.) 26 January 2022 (2022-01-26) paragraphs [0005]-[0007], [0017], [0069] | 1, 8-11 |
| Y | | 4-7 |
| A | | 2 |
| Y | JP 2021-80431 A (TOYO INK SC HOLDINGS CO., LTD.) 27 May 2021 (2021-05-27) paragraphs [0064], [0073] | 5-7 |
| Y | JP 7078189 B1 (TOYO INK SC HOLDINGS CO., LTD.) 31 May 2022 (2022-05-31) paragraphs [0058]-[0060], [0114] | 5-7 |
| Y | WO 2021/192749 A1 (DIC CORP.) 30 September 2021 (2021-09-30) paragraphs [0036], [0051]-[0053] | 5-7 |

✓ Further documents are listed in the continuation of Box C.   ✓ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 August 2023** | **05 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2023/023287** |

**C.     DOCUMENTS CONSIDERED TO BE RELEVANT**

| Category* | Citation of document, with indication, where appropriate, of the relevant passages | Relevant to claim No. |
| --- | --- | --- |
| Y | WO 2018/116811 A1 (DIC CORP.) 28 June 2018 (2018-06-28)<br>paragraphs [0070]-[0077] | 5-7 |

Form PCT/ISA/210 (second sheet) (January 2015)

**INTERNATIONAL SEARCH REPORT**
**Information on patent family members**

International application No.

**PCT/JP2023/023287**

| Patent document cited in search report | | | Publication date (day/month/year) | Patent family member(s) | | | Publication date (day/month/year) |
|---|---|---|---|---|---|---|---|
| WO | 2021/230032 | A1 | 18 November 2021 | (Family: none) | | | |
| JP | 2022-510105 | A | 26 January 2022 | US | 2022/0098377 | A1 | |
| | | | | paragraphs [0005]-[0007] | | | |
| | | | | WO | 2021/085938 | A1 | |
| | | | | EP | 3854839 | A1 | |
| | | | | KR | 10-2021-0052211 | A | |
| | | | | CN | 113068403 | A | |
| JP | 2021-80431 | A | 27 May 2021 | (Family: none) | | | |
| JP | 7078189 | B1 | 31 May 2022 | (Family: none) | | | |
| WO | 2021/192749 | A1 | 30 September 2021 | CN | 115003764 | A | |
| | | | | TW | 202136434 | A | |
| WO | 2018/116811 | A1 | 28 June 2018 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020090627 A
- JP 2021098294 A
- JP 2022510105 W
- JP 2022106918 A